(19) Europäisches Patentamt
European Patent Office
Office européen des brevets

(11) EP 4 556 506 A1

(12) EUROPEAN PATENT APPLICATION
published in accordance with Art. 153(4) EPC

(43) Date of publication:
**21.05.2025 Bulletin 2025/21**

(21) Application number: **23839545.3**

(22) Date of filing: **05.07.2023**

(51) International Patent Classification (IPC):
***C08G 63/78*** (2006.01) ***C08G 63/183*** (2006.01)
***C08G 63/89*** (2006.01) ***C08J 5/18*** (2006.01)

(52) Cooperative Patent Classification (CPC):
**C08J 11/16; C08G 63/183; C08G 63/78; C08G 63/89; C08J 5/18; C08J 11/24;**
C08J 2367/02; Y02W 30/62

(86) International application number:
**PCT/JP2023/024900**

(87) International publication number:
**WO 2024/014373 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112615**

(71) Applicant: **Toyobo Co., Ltd.**
**Kita-ku**
**Osaka-shi, Osaka 530-0001 (JP)**

(72) Inventors:
- **YOSHINO, Kenji**
  **Osaka-shi, Osaka 530-0001 (JP)**
- **SHIBANO, Hiroshi**
  **Osaka-shi, Osaka 530-0001 (JP)**
- **SASAI, Tamayo**
  **Otsu-shi, Shiga 520-0292 (JP)**
- **KINAMI, Maki**
  **Otsu-shi, Shiga 520-0292 (JP)**
- **YAMAMOTO, Yu**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **METHOD FOR PRODUCING POLYESTER FILM THROUGH CHEMICAL RECYCLING AND POLYESTER FILM**

(57) A polyester film obtained by melting and molding a polyester resin, the polyester film being obtained by subjecting a raw material containing bis-2-hydroxyethyl terephthalate to polycondensation, the bis-2-hydroxyethyl terephthalate being obtained by decomposing a polyester resin using an aluminum compound and a phosphorus compound as catalysts.

## Description

### Technical Field

The present invention relates to a method for producing a polyester film using a polyester resin obtained by polycondensation using bis-2-hydroxyethyl terephthalate obtained by chemical recycling, and a polyester film obtained thereby.

### Background Art

Polyester film is widely used as packaging and industrial components because of its excellent mechanical strength, chemical stability, heat resistance, and moisture resistance, as well as high transparency, and stable supply at low cost.

A commonly used polyester film is polyethylene terephthalate, which is a polycondensation product of terephthalic acid and ethylene glycol. Terephthalic acid and ethylene glycol are produced from petroleum, which is a fossil fuel. In recent years, recycling of fossil fuel-derived products is progressing in order to reduce environmental impact, such as reduction of $CO_2$ emission. In polyesters as well, in addition to mechanical recycling by pulverizing and remelt-molding a product, chemical recycling that comprises decomposing a polyester to a monomer level and subjecting the monomer as a raw material to repolycondensation is also being put into practical use (for example, Patent Literature (PTL) 1).

In polyester films as well, in order to reduce environmental impact, utilizing polyethylene terephthalate obtained by chemical recycling from, for example, PET bottles for beverages and polyester fibers for clothing, has been considered. Such an environmentally compatible film is often formed into a product that guarantees the extent to which the product is environmentally compatible, for example, that the product contains more than a certain percentage of a chemically recycled raw material.

On the other hand, in the polyester film production, the entire amount of polyester resin fed for production does not become a film, because there are portions clamped by tenter clips during transverse stretching, and film unsuitable for shipment that has been produced before the production conditions become stable and the obtained film can be taken up as a product. Such recovered polyester resins obtained during the film production process are sometimes reused as raw materials for film production. However, since such recovered polyester resins have been once melted and exposed to a high-temperature environment, degradation has progressed, thus resulting in a reduced molecular weight and increased terminal carboxy groups in the polyester resins. For stabilizing the quality of films produced using such a recovered polyester resin, always adding a constant amount of recovered polyester resin is desirable. However, since a constant amount of recovered polyester resin is not always generated in film production and the product is not always produced in a constant amount, recovered polyester resins are often ones collected from several production lines or products of different brands, which are combined and reused as the recovered polyester resin.

However, since environmentally compatible films have a constraint as described above, non-chemically recycled raw materials must be prevented from unnecessarily mixing into the recovered polyester resin. It has been sometimes difficult to ensure a certain amount of recovered polyester resin. When the product is not always produced in a constant amount and there are short-term fluctuations in the amount produced, it is difficult to avoid fluctuations in the amount of recovered polyester resin added.

For such reasons, there is a growing demand for a film that is produced using chemically recycled polyethylene terephthalate as a raw material and that has no significant change in various properties as film even when the amount of recovered polyester film added varies.

### Citation List

#### Patent Literature

PTL 1: JP2004-175912A

### Summary of Invention

#### Technical Problem

The present invention was made in view of the above problem in the prior art. Specifically, an object of the present invention is to provide a polyester film produced using chemically recycled polyethylene terephthalate as a raw material, wherein the properties of the obtained polyester film do not change significantly even when the amount of recovered polyester film added varies. Another object is to provide a method for producing the polyester film.

Means for Solving the Problems

The present invention comprises the following.

Item 1

A polyester film comprising a chemically recycled polyethylene terephthalate resin obtained by subjecting a raw material containing bis-2-hydroxyethyl terephthalate to polycondensation using an aluminum compound and a phosphorus compound as catalysts, the bis-2-hydroxyethyl terephthalate being obtained by decomposing a polyester resin.

Item 2

The polyester film according to Item 1, wherein the raw material containing bis-2-hydroxyethyl terephthalate accounts for 50 mass% or more of the polyester film.

Item 3

The polyester film according to Item 1 or 2, wherein the polyester resin comprises a recovered polyester resin obtained from a film production.

Item 4

The polyester film according to Item 3, wherein the recovered polyester resin accounts for 5 to 50 mass% of the total polyester resin that constitutes the polyester film.

Item 5

The polyester film according to Item 1 or 3, wherein the polyester resin that constitutes the polyester film has an intrinsic viscosity of 0.52 to 0.73 dL/g.

Item 6

The polyester film according to Item 1 or 3, wherein the polyester resin that constitutes the polyester film has an acid value of 5 to 80 eq/ton.

Item 7

A method for producing a polyester film, comprising the step of producing a polyester film using a chemically recycled polyethylene terephthalate resin obtained by subjecting a raw material containing bis-2-hydroxyethyl terephthalate to polycondensation, the bis-2-hydroxyethyl terephthalate being obtained by decomposing a polyester resin,
the method comprising

> melt-mixing unused chemically recycled polyethylene terephthalate resin and polyethylene terephthalate resin, and molding the mixture into a film,

wherein the unused chemically recycled polyethylene terephthalate resin is obtained by subjecting the raw material containing bis-2-hydroxyethyl terephthalate to polycondensation, and the polyethylene terephthalate resin is a polyethylene terephthalate resin recovered from a melt-molded product discharged in the step of producing a polyester film.

Item 8

The method for producing a polyester film according to Item 7, wherein the recovered polyethylene terephthalate resin accounts for 5 to 50 mass% of the total amount of the unused chemically recycled polyethylene terephthalate resin and the recovered polyethylene terephthalate resin.

Item 9

The method for producing a polyester film according to Item 7 or 8, wherein the bis-2-hydroxyethyl terephthalate

obtained by decomposing a polyester resin in the chemically recycled polyethylene terephthalate resin obtained by subjecting a raw material containing the bis-2-hydroxyethyl terephthalate to polycondensation accounts for 50 mass% or more of the total amount of the bis-2-hydroxyethyl terephthalate used as the raw material in polycondensation of the resin.

Item 10

The method for producing a polyester film according to Item 7 or 8, wherein the chemically recycled polyethylene terephthalate resin obtained by subjecting the bis-2-hydroxyethyl terephthalate obtained by decomposing a polyester resin to polycondensation contains an aluminum compound and a phosphorus compound as catalysts.

Item 11

The method for producing a polyester film according to Item 7 or 8, wherein the difference in intrinsic viscosity between the unused chemically recycled polyethylene terephthalate resin and the recovered polyethylene terephthalate resin is 0.1 dL/g or less.

Item 12

The method for producing a polyester film according to Item 7 or 8, wherein the ratio of the intrinsic viscosity of the unused chemically recycled polyethylene terephthalate resin to the intrinsic viscosity of the recovered polyethylene terephthalate resin is in the range of 0.85 to 1.

Item 13

The method for producing a polyester film according to Item 7 or 8, wherein the difference in acid value between the unused chemically recycled polyethylene terephthalate resin and the recovered polyethylene terephthalate resin is 22 eq/ton or less.

Advantageous Effects of Invention

According to the present invention, using chemically recycled polyethylene terephthalate as a raw material, a polyester film whose properties do not significantly change even when the amount of recovered polyester film added varies can be obtained. Thus, even if the amount produced fluctuates, a film of stable quality can be provided and the effect of reducing environmental impact can be further enhanced.

Description of Embodiments

In the present invention, polyethylene terephthalate polymerized using bis-2-hydroxyethyl terephthalate obtained by chemical recycling is melted and molded into a polyester film. Bis-2-hydroxyethyl terephthalate may be abbreviated below as BHET. Bis-2-hydroxyethyl terephthalate obtained by chemical recycling may be abbreviated below as chemically recycled BHET or

CR-BHET.

Chemically recycled BHET is obtained by heating polyethylene terephthalate in the presence of ethylene glycol to allow a ring-opening polymerization to proceed. Polyethylene terephthalate may be abbreviated below as PET. The PET as a raw material is preferably PET that has been used in some form. Examples include containers such as PET bottles and trays collected from the streets, fibers and products, products discharged during production steps before being taken out as products, products not shipped to the market due to being B-grade products, edge portions gripped during film stretching, scrap materials of slits, and molded products returned due to complaints etc. Such raw material PETs may contain terephthalic acid and ethylene glycol derived from petroleum or derived from a biomass, or may be a mechanically recycled molded article or a mixture of these PETs.

Such raw material PETs are generally pulverized and washed and foreign matter is removed therefrom and the resulting product is used in a ring-opening polymerization step.

Chemically recycled BHET may contain linear dimers and higher polymers, and may also contain mono-2-hydroxyethyl terephthalate, terephthalic acid, and ethylene glycol.

The total of the acid value and the hydroxyl value of the chemically recycled BHET is preferably 6500 eq/ton or more, more preferably 7000 eq/ton or more, and even more preferably 7500 eq/ton or more. The upper limit is preferably

9500 eq/ton, more preferably 9000 eq/ton, and even more preferably 8500 eq/ton. Setting the total of the acid value and hydroxyl value within the above range can ensure the productivity while maintaining sufficient purity.

The chemically recycled BHET may contain dicarboxylic acid components other than the terephthalic acid component and contain glycol components other than ethylene glycol. Examples of dicarboxylic acid components other than the terephthalic acid component include naphthalenedicarboxylic acid and isophthalic acid. Examples of glycol components other than ethylene glycol include diethylene glycol, neopentyl glycol, cyclohexanedimethanol, trimethylene glycol, tetramethylene glycol, ethylene glycol or propylene glycol adducts of bisphenol A, and ethylene glycol or propylene glycol adduct of bisphenol S.

The amount of the dicarboxylic acid components other than the terephthalic acid component is preferably 2 mol% or less, more preferably 1.5 mol% or less, even more preferably 1.0 mol % or less, particularly preferably 0.7 mol% or less, and most preferably 0.5 mol% or less, based on the terephthalic acid component taken as 100 mass%. The amount of the glycol components other than ethylene glycol is preferably 2 mol% or less, more preferably 1.5 mol% or less, even more preferably 1.0 mol % or less, particularly preferably 0.7 mol% or less, and most preferably 0.5 mol% or less, based on the ethylene glycol component taken as 100 mass%. As described above, chemically recycled BHET is preferably produced by ring-opening polymerization of PET, including PET recovered from the market. Although PET recovered from the market may contain components other than PET to adjust crystallinity and physical properties, it is not preferable from the standpoint of cost to separate only pure PET from the recovered material or to purify BHET to a level where components other than terephthalic acid and ethylene glycol are not detectable. Accordingly, the amount of dicarboxylic acid components other than terephthalic acid components and the amount of glycol components other than ethylene glycol may be preferably 0.01 mol% or more, and more preferably 0.05 mol% or more.

Chemically recycled BHET is converted into chemically recycled polyethylene terephthalate resin by adding a polycondensation catalyst and heating under reduced pressure to allow polycondensation to proceed. In this case, the lower limit of the amount of chemically recycled BHET is preferably 50 mass%, more preferably 60 mass%, even more preferably 70 mass%, particularly preferably 80 mass%, and most preferably 90 mass%, based on the total amount of BHET used. By setting the amount of chemically recycled BHET to be not lower than the above-mentioned lower limit, environmental compatibility can be enhanced.

Further, a copolymerization component other than the component derived from the chemically recycled BHET may also be added to the chemically recycled polyethylene terephthalate resin. Representative examples of copolymerizable dicarboxylic acid components and glycol components are the same as those listed above as components that may be contained in the chemically recycled BHET. The amount of dicarboxylic acid components other than the terephthalic acid component is preferably 20 mol% or less, more preferably 15 mol% or less, even more preferably 10 mol% or less, particularly preferably 7 mol% or less, and most preferably 5 mol% or less, based on the terephthalic acid component taken as 100 mol%. The amount of glycol components other than ethylene glycol is preferably 20 mol% or less, more preferably 15 mol% or less, even more preferably 10 mol% or less, particularly preferably 7 mol% or less, and most preferably 5 mol% or less, based on the ethylene glycol component each taken as 100 mol%. These amounts include the amounts of materials other than those derived from chemically recycled BHET.

Chemically recycled polyethylene terephthalate may be abbreviated below as chemically recycled PET or CR-PET.

The catalyst for polycondensation using chemically recycled BHET may be any commonly used catalyst without restrictions. Examples include antimony compounds, titanium compounds, germanium compounds, and composite catalysts of an aluminum compound and a phosphorus compound. Among these, PET obtained from antimony compounds and aluminum compounds is preferred because of high thermal stability of the obtained PET. A representative example of an antimony compound is antimony trioxide.

The lower limit of the amount of the antimony compound added is preferably 50 ppm by mass, more preferably 80 ppm by mass, and even more preferably 100 ppm by mass, in terms of the content of antimony element in the obtained recycled PET. By setting the polymerization rate to be not lower than the above-mentioned lower limit, an economical polymerization rate can be ensured. The upper limit of the antimony element content is preferably 330 ppm by mass, more preferably 300 ppm by mass, even more preferably 270 ppm by mass, particularly preferably 250 ppm by mass, and most preferably 230 ppm by mass. By setting the temperature to be not higher than the above-mentioned upper limit, decomposition of the recovered resin can be suppressed.

Examples of composite catalysts of an aluminum compound and a phosphorus compound include the following.

Aluminum Compound

The aluminum compound may be any aluminum compound that is soluble in a solvent. Known aluminum compounds can be used without limitation. Among these, the aluminum compound is preferably at least one member selected from carboxylates, inorganic acid salts, and chelate compounds, more preferably at least one member selected from aluminum acetate, basic aluminum acetate, aluminum chloride, aluminum hydroxide, aluminum hydroxychloride,

and aluminum acetylacetonate, even more preferably at least one member selected from aluminum acetate, basic aluminum acetate, aluminum chloride, aluminum hydroxide, aluminum hydroxychloride, and aluminum acetylacetonate, particularly preferably at least one member selected from aluminum acetate and basic aluminum acetate, and most preferably basic aluminum acetate.

The amount of the aluminum compound added is preferably 5 to 50 ppm by mass, more preferably 7 to 40 ppm by mass, even more preferably 10 to 30 ppm by mass, and particularly preferably 15 to 25 ppm by mass, in terms of aluminum element content of the chemically recycled PET. If the aluminum element content is less than 5 ppm by mass, the polymerization activity may be insufficient. On the other hand, if the aluminum element content exceeds 50 ppm by mass, the amount of aluminum-based foreign matter may increase.

When the cost is a great concern, the aluminum element content of the chemically recycled PET is preferably 9 to 20 ppm by mass, more preferably 9 to 19 ppm by mass, even more preferably 10 to 17 ppm by mass, and particularly preferably 12 to 17 ppm by mass. When the aluminum element content is less than 9 ppm by mass, the polymerization activity may be insufficient. On the other hand, when the content exceeds 20 ppm by mass, the amount of aluminum-based foreign matter may increase in relation to the phosphorus element content described below; and furthermore, the catalyst cost increases.

Phosphorus Compound

The phosphorus compound is not particularly limited, and a phosphonic acid-based compound and a phosphinic acid-based compound are preferred because of their remarkable effects of enhancing catalytic activity. Among these phosphorus compounds, a phosphonic acid-based compound is more preferred because of its particularly high effect of enhancing catalytic activity.

Among the phosphorus compounds, a phosphorus compound having a phosphorus element and a phenolic structure in the same molecule is preferable. Although any phosphorus compound that has a phosphorus element and a phenolic structure in the same molecule can be used, using one or two or more compounds selected from the group consisting of phosphonic acid-based compounds having a phosphorus element and a phenolic structure in the same molecule and phosphinic acid-based compounds having a phosphorus element and a phenolic structure in the same molecule are preferred because of their remarkable effects of enhancing catalytic activity, and using one or two or more of the phosphonic acid-based compounds having a phosphorus element and a phenolic structure in the same molecule is more preferred because of their particularly high effect of enhancing catalytic activity.

Examples of the phosphorus compound having a phosphorus element and a phenolic structure in the same molecule include compounds represented by $P(=O)R^1(OR^2)(OR^3)$ and compounds represented by $P(=O)R^1R^4(OR^2)$. $R^1$ represents a $C_1$-$C_{50}$ hydrocarbon group containing a phenol moiety, or a $C_1$-$C_{50}$ hydrocarbon group having a substituent, such as a hydroxyl group, a halogen group, an alkoxy group, or an amino group, in addition to a phenolic structure. $R^4$ represents a hydrogen atom, a $C_1$-$C_{50}$ hydrocarbon group, or a $C_1$-$C_{50}$ hydrocarbon group having a substituent, such as a hydroxyl group, a halogen group, an alkoxy group, or an amino group. $R^2$ and $R^3$ each independently represent a hydrogen atom, a $C_1$-$C_{50}$ hydrocarbon group, a $C_1$-$C_{50}$ hydrocarbon group having a substituent, such as a hydroxyl group or an alkoxy group. The hydrocarbon group may have a branching structure, an alicyclic structure such as cyclohexyl, and an aromatic ring structure such as phenyl or naphthyl. The ends of $R^2$ and $R^4$ may be bound to each other.

Examples of the phosphorus compound having a phosphorus element and a phenolic structure in the same molecule include p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl)phosphinate, phenyl bis(p-hydroxyphenyl)phosphinate, p-hydroxyphenylphosphinic acid, methyl p-hydroxyphenyl phosphinate, and phenyl p-hydroxyphenyl phosphinate.

In addition to the examples described above, preferable examples of the phosphorus compound having a phosphorus element and a phenolic structure in the same molecule include phosphorus compounds having a phosphorus element and a hindered phenol structure in the same molecule (a phenol structure in which at least one alkyl group having a tertiary carbon (an alkyl group having a tertiary carbon (preferably, an alkyl group having a tertiary carbon in a benzyl position such as t-butyl or thexyl ; neopentyl, for example) is attached to one or two ortho-positions of a hydroxyl group), preferably a phosphorus compound having phosphorus element and a structure represented by Chemical Formula A below in the same molecule, and more preferably dialkyl 3,5-di-tert-butyl-4-hydroxybenzyl phosphonate represented by Chemical Formula B below. The phosphorus compound for use in producing the polyester resin (B) is preferably dialkyl 3,5-di-tert-butyl-4-hydroxybenzyl phosphonate represented by Chemical Formula B below, and may further include modified products of dialkyl 3,5-di-tert-butyl-4-hydroxybenzyl phosphonate. Details of the modified products will be described later.

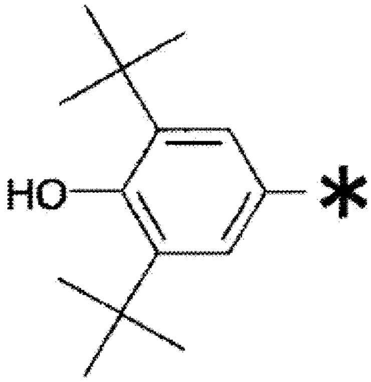

Chemical Formula A

(In chemical formula A, * represents a bonding hand.)

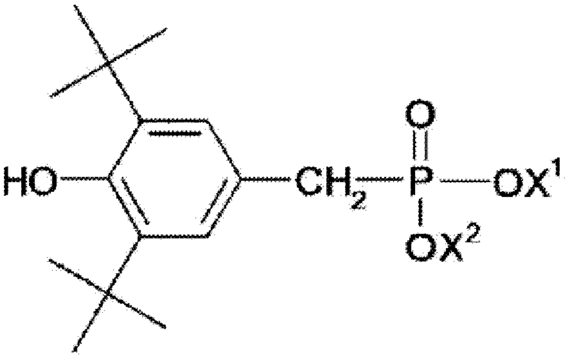

Chemical Formula B

(In Chemical Formula B, $X^1$ and $X^2$ each represent a hydrogen atom or a $C_1$-$C_4$ alkyl group.)

In the present specification, a polyester resin is determined to "have a hindered phenol structure" when at least one hindered phenol structure is detected by P-NMR measurement of a solution of the polyester resin in a hexafluoroisopropanol-based solvent. Specifically, the chemically recycled PET is preferably a polyester resin produced by using a phosphorus compound having a phosphorus element and a hindered phenol structure in the same molecule as a polymerization catalyst. The method (P-NMR spectroscopy) for detecting a hindered phenol structure in the PET will be described later.

In Chemical Formula B above, each of $X^1$ and $X^2$ preferably represents a $C_1$-$C_4$ alkyl group, and more preferably a $C_1$-$C_2$ alkyl group. In particular, a $C_2$ ethyl ester is preferred because Irganox 1222 (produced by BASF) is a commercial product and is easily available.

The phosphorus compound is preferably heat-treated in a solvent before use. The details of the heat treatment will be described later. In case where the phosphorus compound used is dialkyl 3,5-di-tert-butyl-4-hydroxybenzyl phosphonate, which is a phosphorus compound represented by Chemical Formula B, the dialkyl 3,5-di-tert-butyl-4-hydroxybenzyl phosphonate undergoes a partial structural change during the heat treatment. For example, a t-butyl group is detached, an ethyl ester group is hydrolyzed, and the structure changes to a hydroxyethyl ester exchanged structure (an ester exchanged structure with ethylene glycol). Accordingly, in the present invention, examples of the phosphorus compound include structurally modified products of dialkyl 3,5-di-tert-butyl-4-hydroxybenzyl phosphonate as well as dialkyl 3,5-di-tert-butyl-4-hydroxybenzyl phosphonate represented by Chemical Formula B. The detachment of t-butyl group occurs significantly under a high temperature environment in the polymerization step.

Shown below are nine phosphorus compounds obtained through partial structural changes of diethyl 3,5-di-tert-butyl-4-hydroxybenzyl phosphonate. The amounts of components of the phosphorus compound as a result of the structural changes in a glycol solution can be quantified by P-NMR spectroscopy.

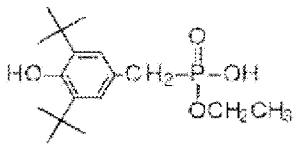 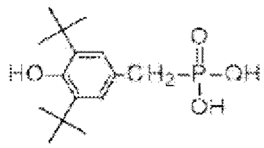 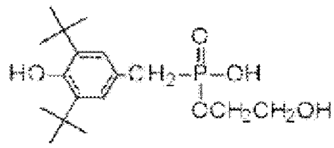

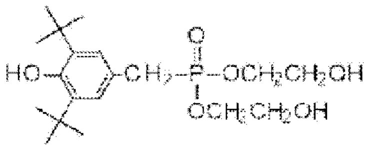 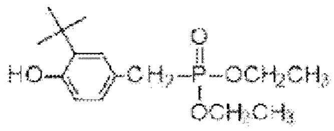 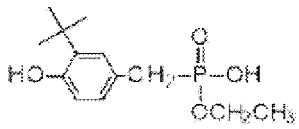

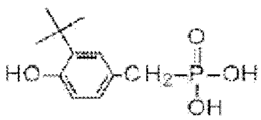 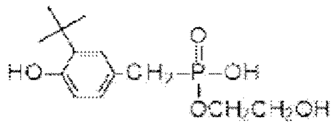 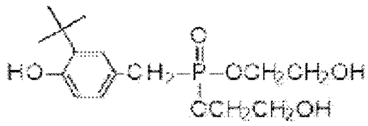

Accordingly, the phosphorus compound of the present invention may include modified products of dialkyl 3,5-di-tert-butyl-4-hydroxybenzylphosphonate represented by the above 9 chemical formulae as well as dialkyl 3,5-di-tert-butyl-4-hydroxybenzyl phosphonate.

When the above Irganox 1222 is used as the phosphorus compound, the polyester resin contains 9 types of phosphorus compound residues shown below in Table 1. When at least one of the 9 types of hindered phenol structures shown in Table 1 is detected by P-NMR spectroscopy, the polyester resin (B) is determined to be a polyester resin produced by using a phosphorus compound having a phosphorus element and a hindered phenol structure in the same molecule as a polymerization catalyst. The use of the phosphorus compound having a hindered phenol structure reduces the catalyst cost and also allows the polymerization catalyst to exhibit sufficient polymerization activity.

Table 1

| Phosphorus structure / Phenol moiety structure | 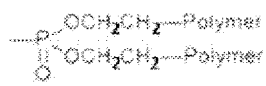 | 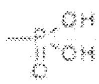 | 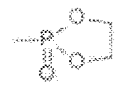 |
|---|---|---|---|
| 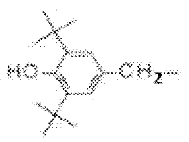 | Chemical Formula 1 | Chemical Formula 4 | Chemical Formula 7 |
| 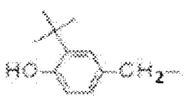 | Chemical Formula 2 | Chemical Formula 5 | Chemical Formula 8 |
| 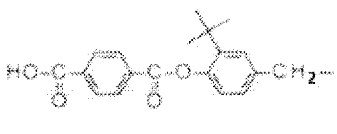 | Chemical Formula 3 | Chemical Formula 6 | Chemical Formula 9 |

In the present invention, at least one of the above structures represented by Chemical Formulae 1, 4, and 7 is preferably contained.

The chemically recycled PET preferably has a phosphorus element content of 5 to 1000 ppm by mass, more preferably 10 to 500 ppm by mass, even more preferably 15 to 200 ppm by mass, particularly preferably 20 to 100 ppm by mass, and most preferably 30 to 50 ppm by mass. A phosphorus element content of less than 5 ppm by mass may lead to reduced polymerization activity and an increased amount of aluminum-based foreign matter. On the other hand, a

phosphorus element content of more than 1000 ppm by mass may cause reduced polymerization activity and an increased catalyst cost due to a large amount of the phosphorus compound added.

If the cost is a greater concern, the phosphorus element content in the chemically recycled PET is preferably 13 to 31 ppm by mass, more preferably 15 to 29 ppm by mass, and even more preferably 16 to 28 ppm by mass. A phosphorus element content of less than 13 ppm by mass may lead to reduced polymerization activity and an increased amount of aluminum-based foreign matter. On the other hand, a phosphorus element content of more than 31 ppm by mass may cause reduced polymerization activity and an increased catalyst cost due to a large amount of the phosphorus compound added.

In the chemically recycled PET, the molar ratio of the phosphorus element with respect to the aluminum element is preferably in the range of 1.00 to 5.00, more preferably 1.10 to 4.00, further preferably 1.20 to 3.50, and particularly preferably 1.25 to 3.00. As described above, the aluminum element and the phosphorus element in the chemically recycled PET respectively originate from the aluminum compound and the phosphorus compound used as polymerization catalysts for producing the phosphorus compound. The aluminum compound and the phosphorus compound combined at a specific ratio functionally form a complex having catalytic activity in a polymerization system and can exhibit sufficient polymerization activity. Although the catalyst cost (production cost) of the polyester resin produced with a polymerization catalyst containing an aluminum compound and a phosphorus compound is higher than that of a polyester resin produced using other catalysts such as an antimony catalyst, the combined use of the aluminum compound and the phosphorus compound at a specific ratio can exhibit sufficient polymerization activity while reducing the catalyst cost. A residual mole ratio of the phosphorus element to the aluminum element of less than 1.00 may reduce thermal stability and thermal oxidation stability and increase the amount of aluminum-based foreign matter. On the other hand, a residual mole ratio of the phosphorus element to the aluminum element of more than 5.00 means that the amount of the phosphorus compound added is too high, which may lead to increased catalyst cost.

If the cost is a greater concern, the residual molar ratio of the phosphorus element to the aluminum element is preferably in the range of 1.32 to 1.80, and more preferably 1.38 to 1.68.

The chemically recycled PET is melted, mixed, and molded into a film. Not all of the resin fed in the film molding is shipped as a product. Products recovered during production steps, such as cut-off ends, slit scraps, and films produced before stable production has been achieved are generated. In some cases, the products recovered from such production steps are not discarded but are reused as a raw material resin for the purpose of environmental protection through resource conservation and cost reduction. In particular, in the case of a PET film stretched in the width direction by a tenter, the portion clipped with a tenter is not stretched. Accordingly, a large amount of product recovered during the production step is generated.

In the present invention, such products recovered from the production steps are preferably mixed with unused chemical recycled PET and reused as a raw material for producing a film. There are also films not having shipped due to their properties failing to satisfy the standards and films returned due to complaints. These films are also preferably mixed with the products recovered during the production step and reused. The PET including products recovered from production steps may be referred to below as "recovered PET." Unused chemically recycled PET may be referred to below as "virgin PET." The term "unused" means that PET has no history of being remelted and solidified after the PET is formed into, for example, pellets.

Although the recovered PET may be pulverized and fed directly into film production equipment, remelting the recovered PET and forming the remelted PET into pellets are preferable for ensuring the stability of the amount fed and suppressing segregation of the recovered PET from virgin PET in the hopper.

According to the present invention, in the film production, virgin PET of chemically recycled PET and PET recovered from the step of producing chemically recycled PET are preferably used as a raw material PET.

The lower limit of the proportion of the recovered PET based on the total raw material resin in the film production is preferably 5 mass%, more preferably 10 mass%, and even more preferably 15 mass%. The upper limit of the proportion of the recovered PET is preferably 50 mass%, more preferably 40 mass%, and even more preferably 35 mass%. By setting the proportion within the above-mentioned range, the raw material for use is ensured, thus achieving stable production and quality stability.

In the film production, not all of the raw material PET used has to be chemically recycled PET, and the raw material PET may contain conventional PET obtained from terephthalic acid and ethylene glycol. In particular, when lubricant particles, resistivity regulators, pigments, UV absorbers, etc., are added in the film production, such additives may be mixed as a master batch. However, it is not always necessary to use chemically recycled PET even as PET for such a master batch. For economical production, these may be the same master batch as those for usual PET films.

In the film production, not all of the raw material resin has to be PET, and the raw material resin may include copolymerized polyesters and other resins according to the application. Specific copolymerized polyesters and other resins are explained in the examples of applications described below. In the above case, even when the resin recovered during the film production step contains resins other than PET, such a resin is regarded as falling within the scope of the recovered PET.

The lower limit of the proportion of chemically recycled PET based on the total resin that constitutes the film is preferably 20 mass%, more preferably 30 mass%, even more preferably 50 mass%, particularly preferably 70 mass%, and most preferably 80 mass%. By setting the proportion not lower than the above-mentioned lower limit, environmental compatibility can be improved.

Such recovered PET has a lower molecular weight or contains an increased amount of terminal carboxy groups, as compared to virgin PET. As an index of molecular weight, intrinsic viscosity is preferably used. The intrinsic viscosity is abbreviated as IV. The terminal carboxyl group content is abbreviated as AV. The cyclic trimer is abbreviated as CT. Even when the amount of recovered PET added varies from lot to lot of production, it is preferable to set the difference in IV and the difference in AV between virgin and recovered PET within specific ranges in order to reduce lot-to-lot quality variation.

The lower limit of the difference in IV between virgin PET and recovered PET is preferably 0.01 dL/g, and more preferably 0.02 dL/g, from a practical standpoint. The upper limit of the difference in IV between virgin PET and recycled PET is preferably 0.1 dL/g, more preferably 0.08 dL/g, even more preferably 0.07 dL/g, particularly preferably 0.065 dL/g, and most preferably 0.06 dL/g.

The lower limit of the IV ratio of recovered PET/virgin PET, which is a ratio of the IV of recovered PET to the IV of virgin PET, is preferably 0.85, more preferably 0.87, even more preferably 0.88, particularly preferably 0.89, and most preferably 0.9. The upper limit of the IV ratio of recovered PET/virgin PET is preferably 0.99, and more preferably 0.98, from a practical standpoint.

The difference in AV between virgin PET and recovered PET is preferably 3 eq/ton, more preferably 4 eq/ton, and even more preferably 5 eq/ton, from a practical standpoint. The upper limit of the difference in AV between virgin PET and recovered PET is preferably 22 eq/ton, more preferably 20 eq/ton, even more preferably 17 eq/ton, particularly preferably 15 eq/ton, and most preferably 13 eq/ton.

By setting the difference in IV between virgin PET and recovered PET, the IV ratio of recovered PET/IV of virgin PET, and the difference in AV between virgin PET and recovered PET within the above-mentioned ranges, quality stability of the obtained products is ensured even if the amount of recovered resin added varies from batch to batch of production. In the above, "from a practical standpoint" means that the recycled PET is neither subjected to solid-phase polymerization nor remelted and subjected to a dehydration polymerization reaction under reduced pressure, and that even if such a step is performed, strict management is not required and such a step can be performed in an economically simple way without the need for complicated measures, such as separating the recovered PETs having different IVs and selecting a recovered PET having an IV that matches the IV of virgin PET.

The CT in the PET is in an equilibrium reaction and the CT content is determined almost entirely according to the resin temperature. Accordingly, when neither virgin PET nor recovered PET is subjected to solid-phase polymerization, the CT content of virgin PET and that of recovered PET are almost equal. In this case, the upper limit of the difference in CT content between virgin PET and recovered PET is preferably 0.1 mass%, and more preferably 0.08 mass%.

On the other hand, when virgin PET is subjected to solid-phase polymerization, the CT content decreases. In this case, the recovered PET may be subjected to solid-phase polymerization. The lower limit of the difference in CT content between virgin PET and recycled PET is preferably 0 mass%, more preferably 0.02 mass%, and even more preferably 0.05 mass%. The upper limit of the difference in CT content between virgin PET and recovered PET is preferably 0.4 mass%, more preferably 0.3 mass%, even more preferably 0.2 mass%, and particularly preferably 0.15 mass%.

In order to set the differences in IV, AV, and CT content between virgin PET and recovered PET within the above-mentioned ranges, the IV, AV and CT content of the virgin PET are preferably within specific ranges.

The lower limit of the IV of virgin PET is preferably 0.54 dL/g, more preferably 0.56 dL/g, even more preferably 0.57 dL/g, and particularly preferably 0.58 dL/g. By setting the IV of virgin PET to be not lower than the above-mentioned lower limit, mechanical properties of the obtained film can be ensured, and the difference in IV and difference in AV between virgin PET and recovered PET can also be reduced, thus making it easier to suppress fluctuations in mechanical properties and ensure film-forming stability.

The upper limit of the IV of virgin PET is preferably 0.75 dL/g, more preferably 0.70 dL/g, even preferably 0.68 dL/g, particularly preferably 0.66 dL/g, and most preferably 0.65 dL/g. By setting the IV of virgin PET to be not higher than the above-mentioned upper limit, film formation stability is ensured, deterioration of the recovered resin is easily suppressed, and the difference in IV and the difference in AV between virgin PET and recycled PET can be easily reduced. Further, when the IV of virgin PET is 0.68 dL/g or less, melt polymerization alone can be performed to produce PET, which is economically advantageous.

From the viewpoint of productivity, the lower limit of the AV of virgin PET is preferably 1 eq/ton, more preferably 3 eq/ton, and even more preferably 5 eq/ton. When PET is produced only by melt polymerization, the lower limit of the AV is preferably 10 eq/ton, and more preferably 15 eq/ton. When the AV of virgin PET is 10 eq/ton or more, a melt polymerization alone can be performed, which is economically advantageous.

The upper limit of the AV of virgin PET is preferably 70 eq/ton, more preferably 60 eq/ton, even more preferably 55 eq/ton, and particularly preferably 50 eq/ton. By setting the AV of virgin PET to be not higher than the above-mentioned upper limit, deterioration of the recovered resin can be easily suppressed.

From the viewpoint of productivity, the lower limit of the CT amount of virgin PET is preferably 0.3 mass%, more preferably 0.5 mass%, even more preferably 0.7 mass%, and particularly preferably 0.8 mass%. The upper limit of the CT amount of virgin PET is preferably 1.1 mass%, more preferably 1.05 mass%, and even more preferably 1 mass%. It can be set to not more than the above. When PET is produced by melt polymerization alone, the CT amount is about 0.9 to 1.0 mass%.

The lower limit of the IV of recovered PET is preferably 0.5 dL/g, more preferably 0.51 dL/g, and even more preferably 0.52 dL/g. By setting the IV of the recovered PET to be not lower than the above-mentioned lower limit, mechanical properties of the obtained film can be ensured and the difference in IV between virgin PET and recovered PET can be easily reduced, thus making it easier to suppress fluctuations in mechanical properties and ensure film-formation stability.

The upper limit of the IV of recovered PET is preferably 0.72 dL/g, more preferably 0.68 dL/g, even more preferably 0.66 dL/g, particularly preferably 0.64 dL/g, and most preferably 0.63 dL/g. By setting the IV of recovered PET to be not higher than the above-mentioned upper limit, film-formation stability can be ensured and the difference in IV and the difference in AV between virgin PET and recovered PET can be easily reduced. Further, when the IV of recovered PET is not higher than the above-mentioned upper limit, solid-phase polymerization of the recovered PET is not performed; or even if it is performed, short-term solid-phase polymerization is sufficient, which is advantageous in terms of cost.

The lower limit of the AV of recovered PET is preferably 3 eq/ton, more preferably 5 eq/ton, even more preferably 10 eq/ton, particularly preferably 15 eq/ton, and most preferably 20 eq/ton. When the AV of the recovered PET is not lower than the above-mentioned lower limit, it is unnecessary to subject recovered PET to solid-phase polymerization; and even if it is performed, short-term solid-phase polymerization is sufficient, which is advantageous in terms of cost. The upper limit of the AV of recovered PET is preferably 85 eq/ton, more preferably 80 eq/ton, even more preferably 75 eq/ton, particularly preferably 70 eq/ton, and most preferably 65 eq/ton. By setting the AV of recovered PET to be not higher than the above-mentioned upper limit, deterioration of the resin when a film is produced by adding recovered resin can be suppressed.

The lower limit of the CT amount of recovered PET is preferably 0.5 mass%, more preferably 0.7 mass%, and even more preferably 0.8 mass%. The upper limit of the CT amount of the recycled PET is preferably 1.1 mass%, more preferably 1.05 mass%, and even more preferably 1 mass%. When PET produced by melt polymerization alone is formed into a film and this film is used as recovered PET, the CT amount is about 0.9 to 1.0 mass%.

The lower limit of the proportion of recovered PET in the total raw material PET used for producing a film is preferably 5 mass%, more preferably 10 mass%, and even more preferably 15 mass%. The upper limit of the proportion of recovered PET is preferably 50 mass%, more preferably 40 mass%, and even more preferably 35 mass%. By setting the proportion of recovered PET within the above-mentioned range, the recovered material for use as a raw material is ensured, thus achieving stable production and ensuring stable quality of the obtained film.

In the film production, it is desirable to prevent the decomposition of PET as much as possible. To do so, for example, the moisture content of the PET used as a raw material may be reduced, the resin temperature during melt-mixing may be lowered, or the time during which the resin is in a molten state may be shortened. Specific examples are as follows:

The lower limit of the moisture content of both the virgin PET and recovered TET used as raw materials in film production is preferably 1 ppm by mass, more preferably 5 ppm by mass, and even more preferably 10 ppm by mass. The upper limit of the moisture content during the film production is preferably 150 ppm by mass, more preferably 100 ppm by mass, even more preferably 70 ppm by mass, particularly preferably 50 ppm by mass, and most preferably 30 ppm by mass. By setting the moisture content to be not higher than the above-mentioned upper limit, decomposition of the resin during the film production steps can be inhibited and deterioration of recovered resin can be inhibited.

The lower limit of the melting temperature of the resin during film production is preferably 270°C, and more preferably 275°C, as determined at the location where the temperature is highest. By setting the melting temperature not lower than the above-mentioned lower limit, productivity can be increased. The upper limit of the melting temperature is preferably 290°C, more preferably 288°C, even more preferably 286°C, and particularly preferably 285°C. By setting the melting temperature of the resin to be not higher than the above-mentioned upper limit, decomposition of the resin during film production steps can be suppressed and deterioration of the recovered resin can be inhibited. In general, during the film production, the resin temperature becomes the highest in the latter-half portion of the extruder, and this can be detected from the value of a thermometer installed in the extruder.

The lower limit of the melting time of the resin during film production is preferably 2 minutes, and more preferably 3 minutes. The upper limit of the resin melting time during the film production is preferably 20 minutes, more preferably 15 minutes. By setting the melting time to be not longer than the above-mentioned upper limit, deterioration of the recovered resin can be suppressed.

It is also important to suppress decomposition of PET in the step of pelletizing recovered PET.

The lower limit of the moisture content of recovered PET during pelletization is preferably 1 ppm by mass, more preferably 5 ppm by mass, and even more preferably 10 ppm by mass. The upper limit of the moisture content of recycled PET during pelletization is preferably 150 ppm by mass, more preferably 100 ppm by mass, even more preferably 70 ppm

by mass, particularly preferably 50 ppm by mass, and most preferably 30 ppm by mass. By setting the moisture content to be not higher than the above-mentioned upper limit, deterioration of the recycled PET can be suppressed.

When the recovered PET is edge portions generated in the film production, pelletizing cut-off pieces immediately after cutting off the edge portions is also preferable.

The lower limit of the melting temperature during pelletization of the recovered PET is preferably 270°C, and more preferably 275°C, as determined at the location where the temperature is highest. By setting the melting temperature to be not lower than the above-mentioned lower limit, productivity can be increased. The upper limit of the melting temperature during pelletization of recovered PET is preferably 290°C, more preferably 288°C, even more preferably 286°C, and particularly preferably 285°C. By setting the melting temperature to be not higher than the above-mentioned upper limit, deterioration of the recovered resin can be suppressed. In general, the resin temperature is the highest in the latter-half portion of the extruder and can be detected from the value of a thermometer installed in the extruder.

The lower limit of the melting time during pelletization of recovered PET is preferably 1 minute, and more preferably 2 minutes. The upper limit of the melting time during pelletization of recovered PET is preferably 15 minutes, and more preferably 10 minutes. By setting the melting time not longer than the above-mentioned upper limit, deterioration of the recovered resin can be suppressed.

Another preferred method comprises melt-kneading the recovered PET under reduced pressure using an extruder equipped with a vent in the pelletization of the recovered PET.

A low molecular weight can be increased by subjecting the recovered PET to solid-phase polymerization. However, unless the purpose is to obtain a film having a high IV, a low AV, and a low CT that cannot be obtained as PET obtained by melt polymerization, subjecting the recovered PET to solid-phase polymerization is not always preferable from an economic standpoint.

In the film production, it is preferred that after the molten resin is extruded into a sheet and cooled, the resulting unstretched sheet is stretched in at least one direction. In stretching, when the film is stretched in the longitudinal direction, using the roll stretching method is preferred, whereas when the film is stretched in the transverse direction, using the tenter stretching method is preferred. Alternatively, simultaneous biaxial stretching, which is stretching longitudinally and transversely at the same time, may be carried out using a tenter.

The longitudinal stretching temperature and the transverse stretching temperature are preferably 80 to 130°C, and more preferably 85 to 120°C, and can be adjusted within this temperature range according to the required properties.

The draw ratio in at least one of the longitudinal and transverse directions, which is the main stretch direction, is preferably 3- to 8-fold, more preferably 3.3- to 7-fold, and can be adjusted within this range according to the required properties. The draw ratio in the other direction can also be adjusted according to the properties required for the film to be produced.

The lower limit of IV of the film is preferably 0.52 dL/g, more preferably 0.54 dL/g, even more preferably 0.55 dL/g, and particularly preferably 0.56 dL/g. The upper limit of IV of the film is preferably 0.73 dL/g, more preferably 0.70 dL/g, even more preferably 0.67 dL/g, particularly preferably 0.65 dL/g, and most preferably 0.63 dL/g. By setting IV of the film within the above-mentioned range, the mechanical properties can be improved, the film-forming properties can also be improved, and decomposition of recovered PET can be suppressed.

The lower limit of AV of the film is preferably 5 eq/ton, and more preferably 10 eq/ton. The upper limit of AV of the film is preferably 80 eq/ton, more preferably 75 eq/ton, even more preferably 70 eq/ton, particularly preferably 65 eq/ton, and most preferably 60 eq/ton. By setting AV to be not higher than the above-mentioned upper limit, decomposition of recovered PET can be suppressed.

The lower limit of the CT amount of the film is preferably 0.5 mass%, more preferably 0.7 mass%, and even more preferably 0.8 mass%. The upper limit of the CT amount of the film is preferably 1.1 mass%, and more preferably 1.05 mass%.

The film may contain colorants, lubricant particles, UV absorbers, melt-specific resistance adjusters, antistatic agents, antioxidants, heat stabilizers, and the like.

The film may have a single-layer structure or may have a multi-layer structure formed by co-extrusion. In the case of a multi-layer composition, the composition may be different in each layer, for example, a UV absorber may be added only to the middle layer, or a lubricant may be added only to the surface layer. The IV, AV, and CT amount may also be different in each layer. When the film has a multi-layer composition, the IV, AV and CT amount of the film are values measured for the film as a whole, without separating each layer.

The polyester film is preferably surface-treated to improve the adhesion to adhesives, coating materials, inks, and the like. The surface treatment is, for example, corona treatment, plasma treatment, or flame treatment.

The polyester film may comprise an adhesion-facilitating layer.

The resin for use in the adhesion-facilitating layer is, for example, a polyester resin, a polyurethane resin, a polycarbonate resin, an acrylic resin, or the like, and preferably a polyester resin, a polyester polyurethane resin, a polycarbonate polyurethane resin, or an acrylic resin. The adhesion-facilitating layer is preferably crosslinked. Examples of crosslinking agents include isocyanate compounds, melamine compounds, epoxy resins, and oxazoline compounds.

Adding a watersoluble resin, such as polyvinyl alcohol, is also a useful means for improving adhesion to a polarizing film.

The adhesion-facilitating layer can be formed by applying an aqueous coating composition containing such a resin optionally with a crosslinking agent, particles, or the like to a polyester film and drying the coating. Examples of particles for use are those for use in the substrates described above.

The adhesion-facilitating layer may be formed off-line on a stretched substrate, but is preferably formed in-line during the film-forming steps. In the case of in-line formation, the coating may be formed either before longitudinal stretching or before transverse stretching. However, it is preferred that a coating composition be applied immediately before transverse stretching, and the coating is then dried and crosslinked in preheating, heating, and heat treatment steps using a tenter. When in-line coating is performed with rolls immediately before longitudinal stretching, it is preferred that the film be dried with a vertical dryer after coating, and then guided to stretching rolls.

The coating amount of the adhesion-facilitating layer is preferably 0.01 to 1.0 $g/m^2$, and more preferably 0.03 to 0.5 $g/m^2$,

The polyester film can be used for various applications, such as the following:

- Release films for a manufacturing process: for example, ceramic green sheets, and resin solution-cast film formation;
- Transfer films: for example, metal foils, printed pattern layers, retardation layers of a liquid crystal compound, and polarizing layers of a liquid crystal compound.

The release film or the transfer film may comprise a release layer, such as a fluorine-based resin, a silicone-based resin, an acrylic resin containing a long-chain alkyl group, or a polyolefin.

- Protective films: for example, protective films for polarizers, surface protection films for image display devices, backside protection films, and solar cell backsheets.

When used for such applications, the polyester film may be provided with an adhesive layer. Protective films may be provided with an adhesive layer, such as a rubber, acrylic, silicone, or urethane adhesive layer. Permanent protective films, such as solar cell back sheets, may be configured to adhere to an object by means of an adhesive.

- Optical films: for example, lens sheet substrates, prism sheet substrates, nanoimprint film substrates, diffusion sheet substrates, shatterproof films, protective films for polarizing films, and transparent conductive film substrates.

In lenses, prism sheets, and nanoimprinting, a pattern can be formed by bringing an acrylic compound layer or the like formed on a polyester film into contact with a mold, and curing.

The surface protection film for image display devices or the like, the protective film for polarizing films, etc., can comprise a hard coat layer, an antireflection layer, a reflection reducing layer, an antiglare layer, or the like. The transparent conductive film may comprise a hard coat layer, a refractive index-adjusting layer, and the like. Examples of the conductive layer of the transparent conductive film include ITO films, metal etching or conductive paste mesh, and coating layers of metal whiskers.

- Electrical, electronic, and communication films: for example, flexible circuit substrates, coverlay films, carrier tape covers, electronic tag substrates, IC cards, and motor insulating films.
- Printing base films: for example, electrical product labels, advertising labels, and campaign labels.
- Barrier films: for example, metal vapor-deposition films, metal oxide vapor-deposition films, and barrier coated films.

For metal vapor deposition, examples include aluminum. Examples of metal oxides include aluminum oxide, silicon dioxide, and aluminum oxide-silicon composite oxide. Examples of barrier coats include sol-gel coats, coats containing inorganic layered compound particles, polyvinyl alcohol coats, ethylene-vinyl alcohol copolymer coats, and vinyl chloride coats.

- Laminated films for packaging: for example, laminates with nylon film, polypropylene film, or the like.
- Heat-sealable films: laminates with a heat-sealing layer, such as polyethylene, polypropylene, or a copolymer polyester.

For these laminates, an adhesive, such as isocyanate curing adhesives, epoxy curing adhesives, or radiation curing adhesives, can be used.

- Heat-shrinkable polyester films: for example, beverage bottle labels, beverage can labels, cap seals, packages for containers with lids, and bundling packages.

In such applications, it is preferable that in order to adjust the heat shrinkage properties, other polyesters or copolymerized polyester resins are blended and the resulting mixture is formed into a film. Examples of other polyesters include tetramethylene terephthalate and trimethylene terephthalate. Examples of copolymerized polyesters include ethylene terephthalate-isophthalate copolymers, ethylenebutylene terephthalate copolymers, ethylene-2,2-dimethylpropylene terephthalate copolymers (obtained by adding neopentyl glycol to a glycol component), ethylene-2,2'-oxydiethylene copolymers (obtained by adding diethylene glycol to a glycol component), ethylene-1,4-cyclohexanedimethylene terephthalate copolymers (obtained by adding 1,4-cyclohexanedimethanol to a glycol component), and the like, as well as copolymers thereof with other components. When the total acidic component and total glycol component in the film are each taken as 100 mol%, the copolymerization amount and the blend amounts can be determined so that the total amount of copolymerization components other than the terephthalic acid component and those other than the ethylene glycol component is preferably 5 to 70 mol%, more preferably 8 to 50 mol%, and even more preferably 10 to 40 mol%.

The polyester film may also be in the form of a cavity-containing film obtained by blending a polyester resin with an incompatible resin, such as polypropylene, polymethylpentene, or polystyrene, and stretching the blend. In this case, the amount of the incompatible resin is preferably 3 to 30 mass%, and more preferably 5 to 20 mass%, based on the total amount of the resins that constitute the film.

Further, various pigments such as titanium oxide, barium sulfate, and carbon may be added to form films in white, black, or other colors. Such films are preferably used for labels, printing films as substitutes for paper, light-reflecting films, circuit substrates, cards, tags, and the like.

Further, polyimide, polyamideimide, polyamide, polyphenylene sulfide, polyphenylene sulfone, polyphenylene ether, or the like may be added to form a modified polyester film. In this case, the amount of the modifying resin other than polyester is preferably 0.5 to 20 mass%, more preferably 1 to 15 mass%, and even more preferably 2 to 10 mass%, based on the total amount of the resins that constitute the film.

## Examples

The present invention is described below more specifically with reference to Examples. However, the present invention is not limited to the Examples below.

### (1) Intrinsic Viscosity (IV)

After about 3 g of a sample was frozen and pulverized and the pulverized product was dried at 140°C for 15 minutes, 0.20 g of the dried sample was weighed and completely dissolved in 20 ml of a mixed solvent of 1,1,2,2-tetrachloroethane and p-chlorophenol (1:3, mass ratio) by stirring at 100°C for 60 minutes. The solution was cooled to room temperature and then filtrated through a glass filter to obtain a sample. The falling time of each of the obtained sample and the solvent was measured with an Ubbelohde viscometer (produced by Rigo Co., Ltd.) adjusted to a temperature of 30°C. The intrinsic viscosity [η] was determined according to the following equation.

$$[\eta] = (-1 + \sqrt{(1 + 4K' \eta Sp)})/2K' C$$

$$\eta Sp = (\tau - \tau 0)\tau 0$$

wherein

- [η]: Intrinsic viscosity (d1/g)
- ηSp: Specific viscosity (-)
- K': Huggins constant (= 0.33)
- C: Concentration (= 1 g/dl)
- τ: Falling time of sample (sec)
- τ0: Falling time of solvent (sec)

### (2) Specific Metal Element Content of Sample

A polyester resin was weighed in a platinum crucible, carbonized on an electric stove, and then incinerated in a muffle furnace under the conditions of 550°C and 8 hours. The sample after incineration was dissolved in 1.2 M hydrochloric acid to prepare a sample solution. The sample solution prepared was measured under the following conditions to determine the contents of antimony element and aluminum element in the polyester resin by high-frequency inductively coupled plasma emission spectrometry.

Apparatus: CIROS-120, produced by SPECTRO
Plasma output: 1400 W
Plasma gas: 13.0 L/min
Auxiliary gas: 2.0 L/min
Nebulizer: cross-flow nebulizer
Chamber: cyclone chamber
Measurement wavelength: 167.078 nm

(3) Phosphorus Element Content of Polyester Resin

The polyester resin was wet-decomposed with sulfuric acid, nitric acid, and perchloric acid, and then neutralized with aqueous ammonia. After ammonium molybdate and hydrazine sulfate were added to the prepared solution, absorbance at a wavelength of 830 nm was measured with an ultraviolet-visible absorptiometer (UV-1700, produced by Shimadzu Corporation). The phosphorus element concentration in the polyester resin was determined from a calibration curve prepared in advance.

(4) Acid Value

The values of each film and raw material polyester resin were measured by the following method.

Preparation of Samples

Each film or raw material polyester resin was pulverized and vacuum-dried at 70°C for 24 hours, and then weighed in a range of 0.20 $\pm$ 0.0005 g with a balance. To measure the acid value of each layer, each layer was extruded as a monolayer to prepare a sample, which was used as a sample for the layer. The mass at that time was defined as W (g). 10 ml of benzyl alcohol and the individual samples were placed into test tubes. The test tubes were immersed in a benzyl alcohol bath heated at 205°C and the sample was dissolved while stirring with a glass rod. Samples obtained by setting the dissolution time to 3 minutes, 5 minutes, and 7 minutes were denoted as A, B, and C, respectively. Next, new test tubes were prepared and only benzyl alcohol was placed therein and treated in the same manner as above. The samples obtained by setting the dissolution time to 3 minutes, 5 minutes, and 7 minutes were denoted as a, b, and c, respectively.

Titration

Titration was carried out using a 0.04 mol/l potassium hydroxide solution (ethanol solution) whose factor was known. Phenol red was used as an indicator. The moment when the greenish yellow color changed to rose pink was defined as a finishing point. The titration amount (ml) of the potassium hydroxide solution was determined. The titration amounts of samples A, B, and C were denoted as XA, XB, and XC (ml). The titration amounts of the samples a, b, and c were denoted as Xa, Xb, and Xc (ml).

Using the titration amounts XA, XB, and XC at the individual dissolution times, the titration amount V (ml) at a dissolution time of 0 min was calculated by the least squares method. Similarly, the titration amount V0 (ml) was calculated using Xa, Xb, and Xc. Subsequently, the acid values were calculated according to the following equation.

$$\text{Carboxyl terminal concentration (eq/ton)} = [(V\text{-}V0) \times 0.04 \times NF \times 1000] / W$$

wherein NF represents a factor of the 0.04 mol/l potassium hydroxide solution.

(5) Quantification of Cyclic Trimer

A sample was frozen and then pulverized or shredded, and 100 mg of the obtained sample was precisely weighed. The weighed sample was dissolved in 3 mL of a mixed solvent of hexafluoroisopropanol/chloroform (2/3, volume ratio), and the resulting solution was further diluted by adding 20 mL of chloroform. After 10 mL of methanol was added to the diluted solution to precipitate a polymer, the resulting mixture was subjected to filtration. The filtrate was evaporated to dryness and made up to a volume of 10 mL with dimethylformamide. The cyclic trimer in the polyester resin or in a hollow molded product thereof was quantified by high performance liquid chromatography under the following conditions. The operation was repeated five times and the average of the measurement values was defined as the CT content.

Apparatus: L-7000 (produced by Hitachi, Ltd.)

Column: μ-Bondasphere $C_{18}$, 5 μ, 100 Å, 3.9 mm × 15 cm (produced by Waters Corporation).
Solvent: Eluent A: 2% acetic acid/water (v/v)

Eluent B: acetonitrile
Gradient B%: 10 → 100% (0 → 55 minutes)

Flow rate: 0.8 mL/min
Temperature: 30°C
Detector: UV-259 nm

(6) Total Elongation (TE)

The total elongation was measured in accordance with JIS-C-2318-19975.3.31 (tensile strength and total elongation). Film specimens having a width of 10 mm and a length of 190 mm were sampled from the MD direction (longitudinal direction, film winding direction) and the TD direction (transverse direction, direction perpendicular to the MD direction). Each film specimen was set in a tensile tester (Tensilon RTC-125A, produced by Orientec Corporation) and stretched at a distance between chucks of 100 mm and a drawing speed of 200 mm/min in an environment at a temperature of 23°C and a humidity of 65% RH. The stress and elongation required to break the film were measured to determine the total elongation (%).
The reduction (%) in breaking elongation (%) is a value calculated by dividing the measured value by the total elongation of film prepared using only virgin PET in the Reference Example.

Preparation of PET Resin

Chemically Recycled PET (A1, A2)

Chemically recycled BHET obtained by subjecting recycled PET bottles, PET fibers, etc., to ring-opening polymerization in the presence of ethylene glycol was subjected to polycondensation using a composite catalyst of basic aluminum acetate and Irganox 1222 (produced by BASF) to obtain chemically recycled BHET (A1, A2). Table 2 shows the properties thereof.
The total of the acid value and the hydroxyl value of the chemically recycled BHET used was 8100 eq/ton. The measurements were carried out in the following manner.

Measurement of Acid Value (AV) of BHET

1.00 g of a sample pulverized in a handy mill (a pulverizer) was precisely weighed, and 20 ml of pyridine was added thereto. Several particles of zeolite were added, and the sample was boiled and refluxed for 15 minutes to dissolve the sample. Immediately after boiling and refluxing, 10 ml of pure water was added and the resulting mixture was allowed to cool to room temperature. Titration was carried out with a N/10-NaOH solution using phenolphthalein as indicator. For the blank, the same operation was carried out without entering the sample. In the case that the oligomers were not dissolved in pyridine, the operation was carried out in benzyl alcohol. The AV (eq/ton) was calculated according to the following equation.

$$AV = (A - B) \times 0.1 \times f \times 1000 / W$$

(wherein A = titration volume (ml),
B = titration volume for blank (ml),
f = factor of N/10-NaOH, and
W = weight of sample (g)).

Measurement of Hydroxyl Value (OHV)

0.50 g of a sample pulverized in a handy mill (a pulverizer) was precisely weighed and mixed with 10 ml of an acetylating agent (a 0.5 mol/L acetic anhydride pyridine solution) and immersed in a water tank at 95°C or higher for 90 minutes. Immediately after the mixture was taken out of the water tank, 10 ml of pure water was added and the resulting mixture was allowed to cool to room temperature. Titration was carried out with a N/5-NaOH-$CH_3OH$ solution using phenolphthalein as indicator. For the blank, the same operation was performed without entering the sample. 20 ml of N/10

hydrochloric acid was titrated beforehand with the N/5-NaOH-$CH_3OH$ solution using phenolphthalein as an indicator, and the factor (F) of the solution is calculated according to the following equation.

$$F = 0.1 \times f \times 20 / a$$

(wherein f = N / 10-hydrochloric acid factor and a = titration volume (ml)).

The OHV (eq/ton) is calculated according to the following equation.

$$OHVo = \{(B - A) \times F \times 1000 / W\} + AV$$

(wherein A = titration volume (ml),
B = titration volume for blank (ml),
F = factor of N/5-NaOH-$CH_3OH$ solution, and
W = weight of sample (g)).

Chemically recycled PET (A3, A4)

Chemically recycled BHET used in A1 was subjected to polycondensation using an antimony trioxide catalyst to prepare chemically recycled PET (A3, A4). Table 2 shows the properties thereof.

Non-chemically Recycled PET (B1)

Terephthalic acid and ethylene glycol were subjected to polycondensation using antimony trioxide as a catalyst to obtain non-chemically recycled PET (B1). The obtained non-chemically recycled PET (B1) had an IV of 0.62 dL/g, an AV of 34 eq/ton, and a CT content of 0.92 mass%. Table 2 shows the properties thereof.

Table 2

| **PET resin** | A1 | A2 | A3 | A4 | B1 |
|---|---|---|---|---|---|
| **Amount of chemically recycled BHET (mass%)** | 100 | 100 | 100 | 100 | 0 |
| **Catalyst** | Al/P | Al/P | Sb | Sb | Sb |
| **Amount of Al element in the resin (mass%)** | 16 | 21 | - | - | - |
| **Amount of P element in the resin (mass%)** | 25 | 45 | - | - | - |
| **Amount of Sb element in the resin (mass%)** | - | - | 155 | 350 | 125 |
| IV(dL/g) | 0.617 | 0.668 | 0.624 | 0.611 | 0.62 |
| AV(eq/ton) | 32 | 30 | 30 | 32 | 3.4 |
| **CT amount (mass%)** | 0.92 | 092 | 0.92 | 0.92 | 0.92 |

Preparation of Recovered PET Pellets

Dried virgin pellets were fed into the film production equipment used in the Examples and extruded into a sheet using a die in the form of cooling rolls under the conditions shown in Table 3 and then wound into a roll without stretching.

This sheet in the form of a wound roll was pulverized with a pulverizer, placed into a flexible container bag, and allowed to stand in an un-air-conditioned room for at least one week. Thereafter, the pulverized resin was dried under reduced pressure and then placed in a twin-screw kneader. After the resin was melted under the conditions shown in Table 3, the molten resin was extruded into a strand shape, cooled with water, and chipped to obtain pellets of a recovered resin. The melting time in Table 3 is the average time that it takes for the resin to move from the area of an extruder set at a temperature higher than or as high as the melting point of the film to the outlet of the die, and is a value calculated by dividing the total amount of the resin in the extruder and the resin from the pipeline to the outlet of the die, which is determined by simulation, by the volume of resin fed per unit time.

Table 3 shows properties of the recovered resin.

Table 3

| | | | | | | | | | | | |
|---|---|---|---|---|---|---|---|---|---|---|---|
| | Recovered PET No. | A1-r1 | A1-r1 | A1-r2 | A1-r3 | A1B-r1 | A2-r1 | A3-r1 | A3-r2 | A4-r1 | A4-r1 |
| PET used | Chemically recycled PET | A1 | A1 | A1 | A1 | A1 | A2 | A3 | A3 | A4 | A4 |
| | Non-chemically recycled PET | - | - | - | - | B1 | - | - | - | - | - |
| | Chemically recycled PET % (100 mass%) | 100 | 100 | 100 | 100 | 80 | 100 | 100 | 100 | 100 | 100 |
| Melting and kneading conditions in film production equipment | Moisture content of PET resin (mass ppm) | 30 | 30 | 30 | 30 | 30 | 50 | 30 | 30 | 60 | 60 |
| | Melting temperature (°C, maximum temperature) | 286 | 286 | 288 | 288 | 286 | 286 | 285 | 285 | 286 | 286 |
| | Melting time (min) | 12 | 12 | 12 | 12 | 12 | 12 | 12 | 12 | 12 | 12 |
| Melting and kneading conditions in recovered PET pelletizing equipment | Moisture content of PET resin (mass ppm) | 30 | 30 | 80 | 30 | 30 | 30 | 30 | 50 | 160 | 160 |
| | Melting temperature (°C, maximum temperature) | 285 | 285 | 287 | 290 | 285 | 285 | 285 | 288 | 290 | 290 |
| | Melting time (min) | 8 | 8 | 12 | 8 | 8 | 8 | 8 | 8 | 17 | 17 |
| | Under reduced pressure | Yes | Yes | Yes | Yes | Yes | Yes | Yes | Yes | No | No |
| Properties of recovered PET | IV (dL/g) | 0.572 | 0.572 | 0.563 | 0.566 | 0.57 | 0.615 | 0.546 | 0.537 | 0.513 | 0.513 |
| | AV (eq/ton) | 41 | 41 | 46 | 43 | 45 | 44 | 48 | 51 | 55 | 55 |
| | CT amount (mass%) | 0.92 | 0.92 | 0.92 | 0.92 | 0.92 | 0.92 | 0.92 | 0.92 | 0.92 | 0.92 |
| Differences in properties between virgin PET and recycled PET | Difference in IV (dL/g) | 0.045 | 0.045 | 0.054 | 0.051 | 0.048 | 0.053 | 0.078 | 0.087 | 0.098 | 0.098 |
| | IV of recycled PET / IV of virgin PET | 0.927 | 0.927 | 0.912 | 0.917 | 0.922 | 0.921 | 0.875 | 0.861 | 0.840 | 0.840 |
| | Difference in AV (eq/ton) | 9 | 9 | 14 | 11 | 13 | 14 | 16 | 19 | 23 | 23 |
| | Difference in CT content (mass%) | 0 | 0 | 0 | 0 | 0 | 0 | 0 | 0 | 0 | 0 |

Film Production

Virgin PET pellets and recovered PET pellets were mixed and dried under reduced pressure. The dried mixture was then placed into a hopper of film production equipment and extruded into a sheet using cooling rolls under the conditions shown in Table 3. The obtained sheet was stretched 3.4-fold in the length direction at 90°C using rolls with different circumferences. Subsequently, the obtained sheet was stretched 3.8-fold in the width direction in a tenter heated to 120°C and then heat-set at 230°C to obtain a biaxially stretched polyester film having a thickness of 40 μm.

Each Reference Example was produced using only virgin resin.

A comparison of the films obtained in the Examples with the film obtained in the Reference Examples shows that even when an increased amount of recovered resin was fed, the difference in IV and the difference in AV were small and deterioration in physical properties (breaking strength) was also small, as compared with those of the Reference Examples. In particular, in the films of Examples 1 to 6, which were obtained using an Al-based catalyst, the differences in IV, AV, and film properties were small; and even when the amount of recovered resin fed changed significantly, problems were less likely to occur.

In contrast, as regards the Comparative Examples, a comparison of the film of Comparative Example 1, which was prepared using 10 mass% of recovered resin, with the film obtained in the Reference Examples shows that the difference in IV and the difference in AV were smaller and no deterioration in physical properties (breaking strength) occurred; however, when the amount of the recovered resin fed was increased to 35%, a decrease in IV, an increase in AV, and physical property deterioration were observed. Thus, in order to produce a film having the same properties, the amount of recovered resin to be fed needed to be restricted. Further, there is also a concern that when a larger amount of recovered resin is fed, the film is susceptible to deterioration if exposed to humid and hot conditions for a long period of time; and it is difficult to obtain a film of stable quality in terms of durability, as well.

Table 4

| | Requirement | Example 1 | Example 2 | Example 3 | Example 4 | Reference Example 1 | Example 5 | Example 6 | Reference Example 1 | Example 7 | Example 8 | Reference Example | Comp. Ex. 1 | Comp. Ex. 2 | Comp. Ex. 3 |
|---|---|---|---|---|---|---|---|---|---|---|---|---|---|---|---|
| Film raw material | Virgin PET | A1 | A1 | A1 | A1 | A1 | A1+B1 (80/20) | A2 | A2 | A3 | A3 | A3 | A4 | A4 | A4 |
| | Recycled PET | A1-r1 | A1-r1 | A1-r2 | A1-r3 | None | A1B-r1 | A2-r1 | None | A3-r1 | A3-r2 | None | A4-r1 | A4-r1 | None |
| | % of recycled PET | 10 | 40 | 35 | 35 | 0 | 25 | 35 | 0 | 35 | 35 | 0 | 10 | 35 | 0 |
| Melting and kneading conditions in film production equipment | Moisture content of PET resin (mass ppm) | 30 | 30 | 30 | 30 | 30 | 30 | 50 | 30 | 30 | 30 | 30 | 60 | 60 | 60 |
| | Melting temperature (°C, maximum temperature) | 286 | 206 | 203 | 208 | 205 | 206 | 236 | 206 | 205 | 285 | 295 | 296 | 236 | 236 |
| | Melting time (min) | 12 | 12 | 12 | 12 | 12 | 12 | 12 | 12 | 12 | 12 | 12 | 12 | 12 | 12 |
| Film properties | IV (dL/g) | 0.586 | 0.573 | 0.572 | 0.574 | 0.591 | 0.576 | 0.617 | 0.637 | 0.540 | 0.538 | 0.565 | 0.540 | 0.514 | 0.552 |
| | Difference in IV from the film obtained using virgin pellets alone (dL/g) | 0.005 | 0.018 | 0.019 | 0.017 | - | - | 0.020 | - | 0.025 | 0.027 | - | 0.012 | 0.038 | - |
| | AV (eq/ton) | 38 | 40 | 41 | 39 | 37 | 42 | 42 | 37 | 45 | 48 | 42 | 48 | 53 | 46 |
| | Elongation at break (%) | 95 | 91 | 93 | 88 | 94 | 92 | 96 | 98 | 90 | 90 | 93 | 89 | 70 | 91 |
| | Reduction in elongation at break | 1.01 | 0.97 | 0.99 | 0.94 | - | 0.98 | 0.98 | - | 0.97 | 0.97 | - | 0.96 | 0.75 | - |

Industrial Applicability

According to the present invention, a polyester film is produced using chemically recycled polyethylene terephthalate as a raw material, wherein properties of the obtained polyester film do not significantly change even when the amount of recovered polyester film added varies. Thus, a film highly effective in reducing environmental impact can be provided as a film with a stable quality even when the production volume fluctuates, thus making a great contribution to industry.

## Claims

1. A polyester film comprising a chemically recycled polyethylene terephthalate resin obtained by subjecting a raw material containing bis-2-hydroxyethyl terephthalate to polycondensation using an aluminum compound and a phosphorus compound as catalysts, the bis-2-hydroxyethyl terephthalate being obtained by decomposing a polyester resin.

2. The polyester film according to claim 1, wherein the raw material containing bis-2-hydroxyethyl terephthalate accounts for 50 mass% or more of the polyester film.

3. The polyester film according to claim 1 or 2, wherein the polyester resin comprises a recovered polyester resin obtained from a film production.

4. The polyester film according to claim 3, wherein the recovered polyester resin accounts for 5 to 50 mass% of the total polyester resin that constitutes the polyester film.

5. The polyester film according to claim 1 or 3, wherein the polyester resin that constitutes the polyester film has an intrinsic viscosity of 0.52 to 0.73 dL/g.

6. The polyester film according to claim 1 or 3, wherein the polyester resin that constitutes the polyester film has an acid value of 5 to 80 eq/ton.

7. A method for producing a polyester film, comprising the step of producing a polyester film using a chemically recycled polyethylene terephthalate resin obtained by subjecting a raw material containing bis-2-hydroxyethyl terephthalate to polycondensation, the bis-2-hydroxyethyl terephthalate being obtained by decomposing a polyester resin,
the method comprising

    melt-mixing unused chemically recycled polyethylene terephthalate resin and polyethylene terephthalate resin, and
    molding the mixture into a film,
    wherein the unused chemically recycled polyethylene terephthalate resin is obtained by subjecting the raw material containing bis-2-hydroxyethyl terephthalate to polycondensation, and
    the polyethylene terephthalate resin is a polyethylene terephthalate resin recovered from a melt-molded product discharged in the step of producing a polyester film.

8. The method for producing a polyester film according to claim 7, wherein the recovered polyethylene terephthalate resin accounts for 5 to 50 mass% of the total amount of the unused chemically recycled polyethylene terephthalate resin and the recovered polyethylene terephthalate resin.

9. The method for producing a polyester film according to claim 7 or 8, wherein the bis-2-hydroxyethyl terephthalate obtained by decomposing a polyester resin in the chemically recycled polyethylene terephthalate resin obtained by subjecting a raw material containing the bis-2-hydroxyethyl terephthalate to polycondensation accounts for 50 mass% or more of the total amount of the bis-2-hydroxyethyl terephthalate used as the raw material in polycondensation of the resin.

10. The method for producing a polyester film according to claim 7 or 8, wherein the chemically recycled polyethylene terephthalate resin obtained by subjecting the bis-2-hydroxyethyl terephthalate obtained by decomposing a polyester resin to polycondensation contains an aluminum compound and a phosphorus compound as catalysts.

**11.** The method for producing a polyester film according to claim 7 or 8, wherein the difference in intrinsic viscosity between the unused chemically recycled polyethylene terephthalate resin and the recovered polyethylene terephthalate resin is 0.1 dL/g or less.

**12.** The method for producing a polyester film according to claim 7 or 8, wherein the ratio of the intrinsic viscosity of the unused chemically recycled polyethylene terephthalate resin to the intrinsic viscosity of the recovered polyethylene terephthalate resin is in the range of 0.85 to 1.

**13.** The method for producing a polyester film according to claim 7 or 8, wherein the difference in acid value between the unused chemically recycled polyethylene terephthalate resin and the recovered polyethylene terephthalate resin is 22 eq/ton or less.

**INTERNATIONAL SEARCH REPORT**

International application No. **PCT/JP2023/024900**

**A. CLASSIFICATION OF SUBJECT MATTER**

***C08G 63/78***(2006.01)i; ***C08G 63/183***(2006.01)i; ***C08G 63/89***(2006.01)i; ***C08J 5/18***(2006.01)i
FI: C08G63/78; C08G63/183; C08G63/89; C08J5/18 CFD

According to International Patent Classification (IPC) or to both national classification and IPC

**B. FIELDS SEARCHED**

Minimum documentation searched (classification system followed by classification symbols)

C08G63/78; C08G63/183; C08G63/89; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 02/22707 A1 (TOYO BOSEKI K.K.) 21 March 2002 (2002-03-21) claims 1-2, 5, p. 4, lines 16-28, p. 32, lines 27-29, examples 52-54 | 1-13 |
| Y | JP 2010-111636 A (TORAY INDUSTRIES, INC.) 20 May 2010 (2010-05-20) claims 1-3, paragraphs [0001]-[0003], example 1 | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **26 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/024900**

| Patent document cited in search report | Publication date (day/month/year) | Patent family member(s) | Publication date (day/month/year) |
|---|---|---|---|
| WO 02/22707 A1 | 21 March 2002 | US 2004/0058805 A1 claims 1-2, 5, paragraphs [0018], [0150], examples 52-54<br>EP 1327648 A1<br>CN 1471553 A | |
| JP 2010-111636 A | 20 May 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004175912 A